# EUROPEAN PATENT SPECIFICATION

(11) **EP 0 478 139 B1**
(45) Date of publication and mention of the grant of the patent: **11.05.1994**
(21) Application number: 91307729.3
(22) Date of filing: 22.08.1991
(51) Int. Cl.: A22C 17/00

(54) **Apparatus for the deboning of pieces of meat with oblong bones**
Entbeinungsvorrichtung für Fleischstücke mit länglichen Knochen
Appareil à désosser de pièces de viande aux os oblongs

(30) Priority: 29.08.1990 DK 2071/90
(43) Date of publication of application: 01.04.1992
(73) Proprietor: Slagteriernes Forskningsinstitut, DK-4000 Roskilde (DK)
(72) Inventor: Larsen, Poul, DK-3450 Alleroed (DK); Sasserod, Michael, DK-2000 Frederiksberg (DK); Vanderskrog, Mogens, DK-9388 Vestbjerg (DK)
(74) Representative: Bayliss, Geoffrey Cyril

(56) References cited:
- EP-A- 0 319 090
- DK-A- 8 704 360
- FR-E- 94 736
- SOVIET PATENTS ABSTRACTS, 9 February 1983, Derwent Publications Ltd., GB; & SU-A-862082 (SHULKIN) 23 February 1982 *abstract*

## Description

The present invention relates to an apparatus for the deboning of pieces of meat with oblong bones, which apparatus comprises a conveyor above which are located one or several fixed rollers designed to grip into a piece of meat lying on the conveyor, allowing the rollers and the conveyor to convey the piece of meat forward in a squeezed way towards a deboning area, comprising a horizontal driving roller and fingers which are placed after the driving roller and which protrude into the travelling path of the piece of meat, whereby the fingers are placed at an interval which allows the passage of bones between them, whereas the meat will be bent down into the gap between the fingers and the driving roller.

In Danish Patent Application No. 4360/87 is a description of such an apparatus for the deboning of a piece of pork. The apparatus is provided with a conveyor belt, on which an operator puts the piece of meat with ribs which are to be removed. The piece of meat is conveyed under some squeezing guide bars having a spacing which corresponds to the distance between ribs. The protruding ribs will be guided into the interspaces between the rods. A roller provided with star-shaped rubber wheels will grab hold of the ribs lying between the rods and presses the meat against the surface of the conveyor. In this way there is provided a squeezed conveyance of the piece of meat on the conveyor belt.

The conveyor belt runs round a driving roller with a soft surface. Alternatively, the roller may be suspended in a yielding way. Above the driving roller is placed a toothed roller which in a squeezing way transports the piece of meat further on. The guide bars are bent down towards the driving roller immediately after the roller, so that the formed fingers will force the meat downwards. Due to the stiffness of the ribs it is unlikely that they will follow the meat. Instead they will disengage themselves from the meat and pass through the interspace between the fingers, after which they will be caught by two rollers which pull them out of the meat.

The above known apparatus is inferior in that the piece of meat will often get stuck at the bent fingers, as there does not seem to be enough power to disengage the ribs from the meat. Instead the piece of meat may take up a transversal position and completely block the apparatus.

It is the object of the present invention to change the known apparatus in such a way that the problem mentioned is avoided or at least reduced considerably, so that the apparatus may function under conditions of work at slaughterhouses and meat processing plants.

The apparatus according to the invention is characterized in that the shaft ends of the driving roller are supported in bearings which can move independently of each other in a plane which is at right angles to the axis of the shaft and in that each of the bearings is actuated upwards and forward in the direction towards the fingers.

This way of mounting the driving roller provides not only an automatic adjustment of the roller according to the thickness of the meat positioned between the driving roller and the roller above, but also an adjustment of the gap between the driving roller and the fingers. Furthermore, the driving roller will adapt itself to the varying thicknesses of the piece of meat across the width.

Opposite the area where the bones are separated from the meat, the meat will be pressed firmly against the fingers over the entire width of the piece of meat due to the special suspension of the driving roller and due to the upwards and forward directed action on the bearings. In this way the bones will be separated more easily from the meat. At the same time the piece of meat is conveyed forward in a powerfull way. The deboning of a piece of meat in an apparatus with the present modification may therefore be performed with an improved rate of success. The financial loss which may arise due to a necessary, manual final treatment of the meat in order to remove remnants of bone has been reduced considerably.

The upwards and forward directed action on each of the shaft ends of the driving rollers may be provided by power means known per se, such as springs, but the power means preferably used are devices which are operated by a hydraulic medium or by a gas medium, since the action from these are independent of the length of travel. Hydraulic or pneumatic cylinders may be applied. Preferably, the action towards the fingers is provided by means of pneumatic springs, primarily bellows operated by pneumatic air, since they are very compact and since they may produce great force.

In order to provide good contact between the piece of meat and the fingers/roller an upwards and forward directed force of considerable strength may be used, e.g. a force of at least 500 kN on each shaft end. The direction of the force may form an angle to the horizontal plane, e.g. in the interval of 30 to 60 degrees.

The upwards and forward directed force may be provided by means of several power means which actuate the shaft ends, e.g. one horizontally and one vertically operating power means at each shaft end allowing the shaft end to move in the vertical direction independently of its horizontal position, and vice versa.

The driving roller and the conveyor are preferably interconnected in such a way that the conveyor will follow the different movements of the driving roller as a piece of meat is gradually conveyed through the apparatus. In this way they can co-operate and provide the optimum grip of the piece of meat during the deboning process.

By one embodiment of the apparatus according to the invention, the driving roller and the conveyor are mounted on a common frame which is movably suspended in a stand, and power means actuating the frame are provided between the frame and the stand.

The frame may e.g. comprise two side members in which are mounted bearings for the driving roller and for the rollers of the conveyor. At each of the shaft ends of the driving roller may be placed vertically acting power means designed to actuate the respective side members upwards in relation to the stand, whereas horizontally acting power means may be located between the remote ends of the side members and the stand.

The frame may comprise a horizontal mounting plate, on which are mounted two vertically acting power means, the movable part of which is connected each to its own side member near the shaft end of the driving roller. The side members may be hinged in their other end to the plate.

The mounting plate may rest on the stand in a horizontally movable way, e.g. by means of wheels or slide pieces. Between the stand and the plate there may be two horizontally acting power means which actuate the plate with a horizontal force towards the fingers which separate the bones from the meat.

When the apparatus is in operation, the driving roller will take up different sloping positions, depending upon the thickness of the piece of meat in question. It may also be desirable that the driving roller is allowed to move in its longitudinal direction. The driving roller may e.g. be suspended in the stand with two horizontal power means, which will actuate the driving roller back to the central position when it deviates from this position.

The driving roller and the conveyor may be built in one unit, so that the roller serves as a driving roller for the conveyor belt, as shown in Fig. 1 of the above-mentioned Danish patent application No. 4360/87. However, it is to be preferred that the conveyor and the driving roller are kept apart, because in that case it is easier to use a driving roller with a small diameter. In order to facilitate the separation of bones and meat, the driving roller primarily used has a diameter of less than 60 mm.

The driving roller preferably has a diameter which is diminishing towards its ends, so consequently the thick right-hand or left-hand side of the piece of meat may more easily pass the gap between the driving roller and the roller above. The diameter of the driving roller may e.g. be 2-5 mm smaller at the ends than at the middle.

To grip the bone ends which pass through the interspace between the fingers there are preferably two rollers with opposite directions of rotation. The shaft ends of the rollers can move independently of each other in a vertical direction, so that the gap between the two rollers may be adapted to the thickness of the bones. The shaft ends may be actuated towards the gripping position by power means, e.g. pre-tensioned steel springs. By this embodiment the separation and the extraction are improved further, since all of the bones will engage with the rollers, which are preferably operating at a higher peripheral velocity than the driving roller.

The rollers are preferably made of steel and they are provided with sharp teeth which can cut into the surface of the bones.

The invention will be described in further detail below with reference to the drawings, in which
Fig. 1 shows a sectional side view of an embodiment of the apparatus according to the invention,
Fig. 2 the same side view with a piece of pork in the apparatus, and
Fig. 3 a sectional front view of the apparatus taken through line III-III of Fig. 1.

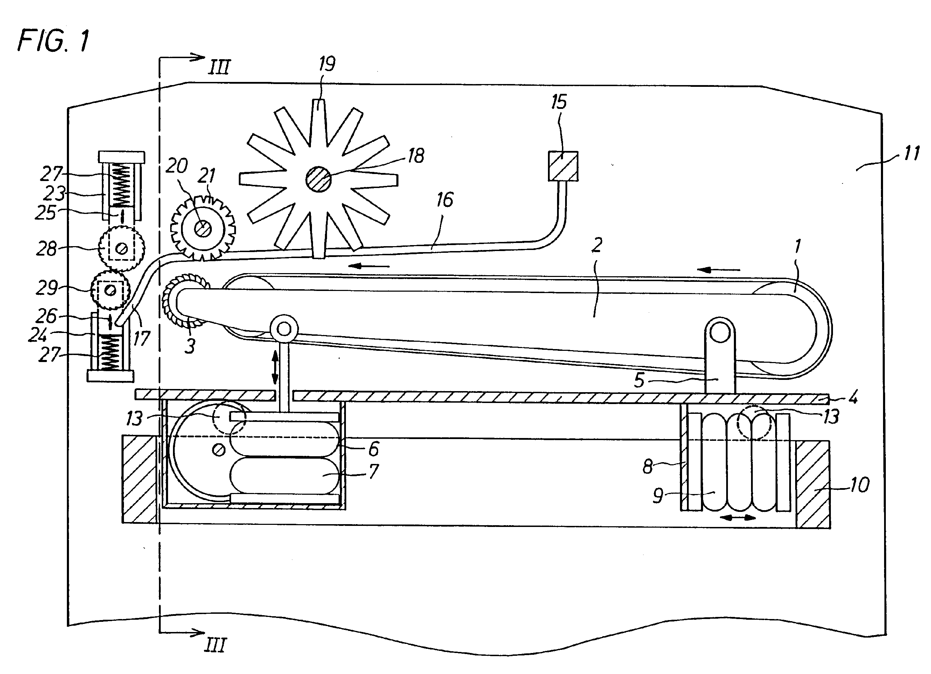

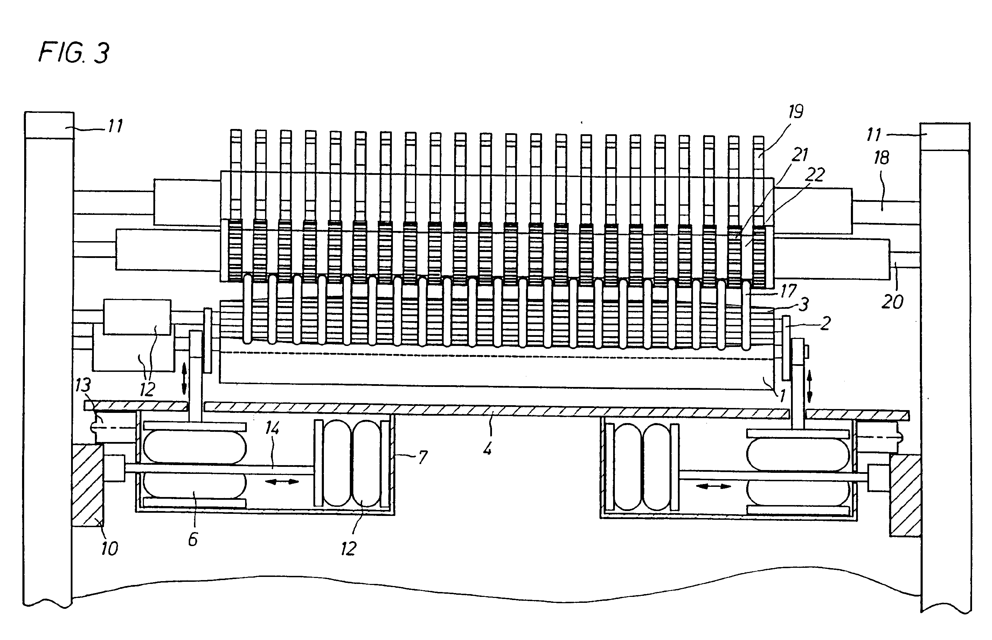

The apparatus comprises a conveyor 1 having two rollers and a rubber belt (Fig. 1). The rollers of the conveyor are carried by side members 2, located on either side of the conveyor. A driving roller 3 is suspended in the side members 2 in such a way that it can rotate. The driving roller 3 has a diameter which diminishes towards its ends (Fig. 3) and it is provided with teeth essentially over the entire width of the roller.

The side members 2 are fastened in one end (Fig. 1) to a mounting plate 4 by means of a swivel member 5, so that the conveyor 1 and the driving roller 3 together may turn on the shaft of the swivel member, which is at right angles to the paper. A vertically operating bellow 6 is fastened at the other end of each of the side members. The bellows 6 are placed in their respective houses 7, which are welded to the underside of the mounting plate 4.

Under the mounting plate 4 two horizontally operating bellows 9 are fastened on brackets 8. The other end of these bellows rest on the side of a frame 10. The frame constitutes part of a stand 11 which carries motors for the conveyor 1 and the driving roller 3. The driving shafts of the motors are connected to these parts by means of universal joints 12 (Fig. 3).

The mounting plate 4 is provided with four wheels 13. The plate with the conveyor and the driving roller may therefore, by rolling or sliding of the wheels on the frame 10, move in a horizontal plane which is parallel to the plane of the plate. In each of the housings 7 under the plate 4 there are two horizontally operating bellows 12, one end of which rests on the side of the housing, whereas the other end is provided with a distance piece 14. The free end of these distance pieces rests on the inside of the frame 10. In conjunction with the bellows 12 there are some stop devices, so that when the plate 4 is dislocated to the left of the central position (Fig. 3) it will be actuated to the right by the left-hand bellows, whereas it will be actuated to the left by the right-hand bellows if the plate is in a position to the right of the central position.

Above the conveyor 1 a fixing bar 15 is mounted in the stand 11 (Fig. 1). It carries a line of round rods 16, the free ends of which form oblique, curved and horizontally flexible fingers 17. The distance between the rods corresponds to the distance between the ribs in a piece of pork.

A driving shaft 18 supported in the stand 11 carries a line of rubber star wheels 19, the points of which may reach down in the spacing between the rods 16. Another driving shaft 20 in the stand 11 carries a line of toothed steel wheels 21. They also reach down in the interspace between the rods 16. Between the individual steel wheels 21 are fitted nylon disks 22 which limit the upward movement of the rods.

In the stand 11 are provided two pairs of slideways 23 and 24, in which two pairs of bearing blocks 25 and 26 are guided vertically. The blocks are actuated by springs 27. Each pair of bearing blocks supports a toothed steel roller 28 and 29.

The apparatus is operating in the following way:

After a possible pre-processing, comprising scoring of the membranes of the ribs of a piece of pork, an operator puts the piece of meat on the conveyor 1, so that the rib side is facing upwards and the ribs lie parallel with the direction of conveyance of the conveyor. The free ends of the ribs shall be in front in the direction of conveyance. The conveyor carries the piece of meat under the bars 16, where the ribs will move into the interspaces between the bars, since the distance between the upper surface of the conveyor and the bars will diminish in the direction of conveyance. Having passed some distance under the bars the piece of meat will press the conveyor 1 downwards against the upwards action of the bellows 6, by which one side of the conveyor will typically be pressed further down than the other side because of the varying thicknesses across the piece of meat. In this way the gap between the conveyor and the bars will adjust itself automatically as to whether it is a right-hand or a left-hand piece of meat from the carcass. The bellows 6 are connected with a reservoir of compressed air, the pressure of which may be adjusted. The force from each of the bellows under working conditions is typically 500 kN.

The points of the star wheels 19 grab hold of the rib side of the piece of meat and they assist in its conveyance of the piece of meat squeezed between the conveyor belt and the line of rods.

The piece of meat is conveyed to the gap between the driving roller 3 and the steel wheels 21. Here the engagement is particularly good, as the teeth of the driving roller and the steel wheels grab hold of the piece of meat over its entire width.

When the piece of meat hits the fingers 17, the meat will be bent downwards around the periphery of the driving roller 3, whereas the ribs, because of their stiffness, will disengage themselves from the meat and maintain the horizontal path of travel. They will pass between the fingers 17. The meat will be carried further on in a squeezed way in the gap between the driving roller 3 and the fingers 17, as it pushes the driving roller 3 back, towards the right in Fig. 1 against the action of the bellows 9. The driving roller 3 will also adjust itself to the varying thicknesses of the meat in the gap and exert an action on the meat which by and large is constant over the entire width, which ensures a good grip between the meat and the teeth of the driving roller.

The pressure in the bellows 9 may e.g. be adjusted to such a level that each of the bellows exerts a constant, horizontal force of 500 kN during operation. The force from the bellows 6 and 9 thus add to a force of 700 kN. It is directed forward and upwards towards the curved section of the rods 16 where the separation of bones from meat primarily takes place. A firm contact is here provided between meat and rods over the entire width, which facilitates the separation.

The driving roller 3 and consequently the mounting plate 4 will typically be likely to adjust themselves in an inclined position during deboning. The bellows 12 with their distance pieces 14 will allow this against a certain reaction. When a piece of meat no longer actuates the driving roller 3 towards a sloping position, one of the bellows 12 will make sure that the mounting plate with driving roller and conveyor is readjusted to the central position.

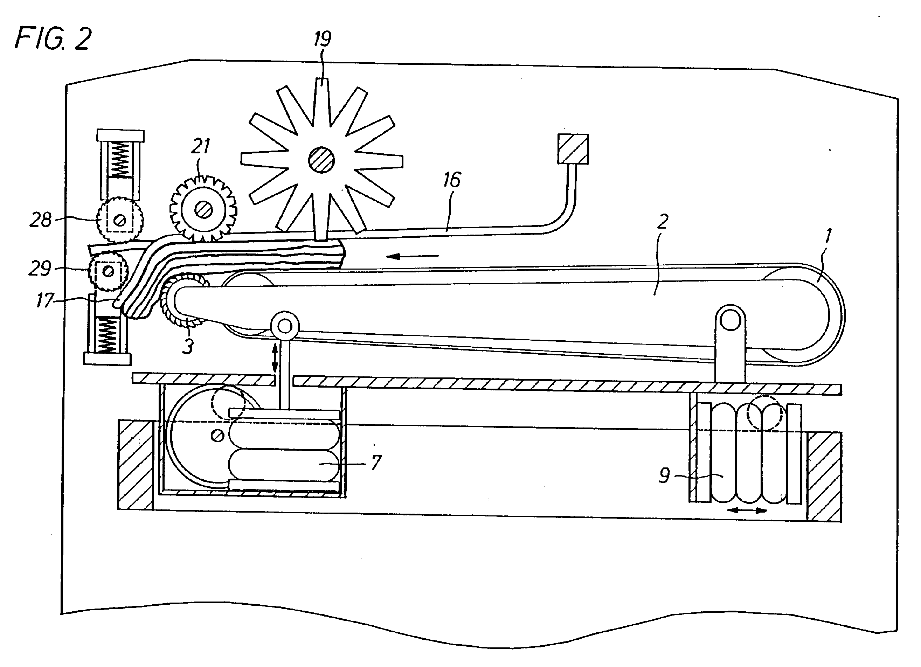

The ribs proceed their travel to the rollers 28 and 29, where the teeth of the rollers grab hold of the bones assisted by the springs 27. Fig. 2 shows this phase of the deboning process.

Finally, the ribs are disengaged from their cartilage seat in the meat and they are thrown down on to a transverse conveyor belt which removes them to a waste container. The deboned meat falls down on to a conveyor belt located under the driving roller 3 and it is carried on to further processing, bits of cartilage, sinews and membranes being removed manually to the necessary extent.

## Claims

1. Apparatus for the deboning of pieces of meat with oblong bones, which apparatus comprises a conveyor (1), above which is located one or several fixed rollers (19,21) designed to grip into a piece of meat lying on the conveyor, allowing the rollers and the conveyor to convey the piece of meat forward in a squeezed way towards a deboning area, comprising a horizontal driving roller (3) and fingers (17) which are placed after the driving roller and which protrude into the travelling path of the piece of meat, whereby the fingers (17) are placed at an interval which allows passage of bones between them, whereas the meat will be bent down into the gap between the fingers and the driving roller, **characterized** in that the shaft ends of the driving roller (3) are supported in bearings which can move independently of each other in a plane which is at right angles to the axis of the shaft, and in that each of the bearings is actuated upwards and forward in the direction towards the fingers.

2. Apparatus according to Claim 1, **characterized** in that the action towards the fingers is provided by means of pneumatic springs, preferably bellows (6,9) operated by pneumatic air.

3. Apparatus according to Claims 1-2, **characterized** in that the driving roller (3) and the conveyor (1) are interconnected in such a way that the conveyor follows the movements of the driving roller as a piece of meat is gradually conveyed through the apparatus.

4. Apparatus according to Claims 1-3, **characterized** in that the driving roller (3) and the conveyor (1) are mounted on a common frame (2,4), which is movably suspended in a stand (10,11), and in that power means (9,12) actuating the frame are provided between the frame (2,4) and the stand (10,11).

5. Apparatus according to Claims 1-4, **characterized** in that the frame comprises two side members (2), in which bearings are mounted for the driving roller and for the rollers of the conveyor, by which vertically acting power means (6) may be located at each shaft end of the driving roller, designed to actuate the respective side members (2) upwards in relation to the stand (10,11), whereas horizontally acting power means (9) may be located between the remote ends of the side members and the stand.

6. Apparatus according to Claims 1-5, **characterized** in that the frame comprises a horizontal mounting plate (4), on which are mounted two vertically acting power means (6), the movable parts of which are connected each to its own side member (2) near the shaft end of the driving roller.

7. Apparatus according to Claims 1-6, **characterized** in that two horizontally acting power means (9) are placed between the stand (10,11) and the plate (4), which means actuate the plate with a horizontal force towards the fingers (17) which separate the bones from the meat.

8. Apparatus according to Claims 1-7, **characterized** in that the driving roller (3) has a diameter of less than 60 mm.

9. Apparatus according to Claims 1-8, **characterized** in that the driving roller (3) has a diameter which is diminishing towards its ends.

10. Apparatus according to Claims 1-9 with two rollers (28,29) to grab hold of the bone ends which pass through the interspace between the fingers (17), **characterized** in that the shaft ends of the rollers can move independently of each other in the vertical direction and in that the shaft ends may be actuated towards the gripping position by power means (27).

## Patentansprüche

1. Vorrichtung zum Entbeinen von Fleischstücken mit länglichen Knochen, bestehend aus einem Transportband (1), über dem sich ein oder mehrere feste Zahnwalzen (19, 21) befinden, die die Aufgabe haben, in ein auf dem Transportband liegendes Fleischstück einzugreifen, so daß die Zahnwalzen und das Transportband das Fleischstück in zusammengepreßtem Zustand zu einer Entbeinungszone transportieren können, die eine horizontale Antriebswalze (3) und Finger (17) aufweist, die sich hinter der Antriebswalze befinden und in den Bewegungsweg des Fleischstücks hineinragen, wobei die Finger (17) in einem Abstand angebracht sind, der den Durchtritt der Knochen zwischen ihnen zuläßt, während das Fleisch abwärts in die Lücke zwischen den Fingern und der Antriebswalze gebogen wird, **gekennzeichnet** dadurch, daß die Wellenenden der Antriebswalze (3) von Lagern gehalten werden, die unabhängig voneinander in einer Ebene rechtwinklig zur Wellenachse bewegt werden können, und dadurch, daß jedes Lager nach oben und vorn in Richtung zu den Fingern bewegt werden kann.

2. Vorrichtung nach Anspruch 1, **gekennzeichnet** dadurch, daß die Bewegung in Richtung zu den Fingern mittels pneumatischer Federn, vorzugsweise druckluftbetriebene Bälge (6,9), bewirkt wird.

3. Vorrichtung nach Anspruch 1 und 2, **gekennzeichnet** dadurch, daß die Antriebswalze (3) und das Transportband (1) so miteinander verbunden sind, daß das Transportband den Bewegungen der Antriebswalze folgt, wenn ein Fleischstück allmählich durch die Vorrichtung transportiert wird.

4. Vorrichtung nach Anspruch 1 bis 3, **gekennzeichnet** dadurch, daß die Antriebswalze (3) und das Transportband (1) auf einen gemeinsamen Rahmen (2, 4) montiert sind, der beweglich in eine Halterung (10, 11) eingehängt ist, und dadurch, daß Energiemittel (9, 12) zur Bewegung des Rahmens zwischen dem Rahmen (2, 4) und der Halterung (10, 11) angebracht sind.

5. Vorrichtung nach Anspruch 1 bis 4, **gekennzeichnet** dadurch, daß der Rahmen zwei Seitenteile (2) aufweist, in denen Lager für die Antriebswalze und für die Walzen des Transportbandes angebracht sind, wobei sich an jedem Wellenende der Antriebswalze vertikal wirkende Energiemittel (6) befinden können, die dazu dienen, das jeweilige Seitenteil (2) nach oben in Beziehung zur Halterung (10, 11) zu bewegen, während horizontal wirkende Energiemittel (9) zwischen den entfernten Enden der Seitenteile und der Halterung angebracht sein können.

6. Vorrichtung nach Anspruch 1 bis 5, **gekennzeichnet** dadurch, daß der Rahmen eine horizontale Montageplatte (4) aufweist, auf die zwei vertikal wirkende Energiemittel (6) montiert sind, deren bewegliche Teile jeweils mit dem eigenen Seitenteil (2) nahe beim Wellenende der Antriebswalze verbunden sind.

7. Vorrichtung nach Anspruch 1 bis 6, **gekennzeichnet** dadurch, daß zwei horizontal wirkende Energiemittel (9) zwischen der Halterung (10, 11) und der Platte (4) angebracht sind und daß diese Energiemittel die Platte mit horizontaler Kraft zu den Fingern (17) bewegen, die die Knochen vom Fleisch ablösen.

8. Vorrichtung nach Anspruch 1 bis 7, **gekennzeichnet** dadurch, daß die Antriebswalze (3) einen Durchmesser von weniger als 60 mm aufweist.

9. Vorrichtung nach Anspruch 1 bis 8, **gekennzeichnet** dadurch, daß die Antriebswalze (3) einen sich zu den Enden hin verjüngenden Durchmesser aufweist.

10. Vorrichtung nach Anspruch 1 bis 9 mit zwei Walzen (28, 29) zum Greifen und Festhalten der Knochenenden, die durch den Zwischenraum zwischen den Fingern (17) vorrücken, **gekennzeichnet** dadurch, daß sich die Wellenenden der Walzen unabhängig voneinander in vertikaler Richtung bewegen können, und dadurch, daß die Wellenenden durch Energiemittel (27) in die Greifposition gebracht werden können.

## Revendications

1. Dispositif pour désosser des pièces de viande ayant des os oblongs, lequel dispositif comporte un convoyeur (1), au dessus duquel est situé un rouleau fixe ou sont situés plusieurs rouleaux fixes (19, 21) conçus pour serrer une pièce de viande se trouvant sur le convoyeur, permettant aux rouleaux et au convoyeur de transporter la pièce de viande vers l'avant dans un état comprimé vers une zone de désossage, comportant un rouleau d'entraînement horizontal (3) et des doigts (17) qui sont placés après le rouleau d'entraînement et qui font saillie dans le trajet de déplacement de la pièce de viande, de sorte que les doigts (17) sont placés selon un intervalle qui permet le passage des os entre eux, alors que la viande est infléchie vers le bas dans l'espace existant dans les doigts et le rouleau d'entraînement, caractérisé en ce que les extrémités de l'arbre du rouleau d'entraînement (3) sont supportées dans des paliers qui peuvent se déplacer de manière indépendante l'un de l'autre dans un plan qui est à angle droit avec l'axe de l'arbre, et en ce que chacun des paliers est actionné vers le haut et vers l'avant en direction des doigts.

2. Dispositif selon la revendication 1, caractérisé en ce que l'actionnement vers les doigts est effectué par l'intermédiaire de ressorts pneumatiques, de préférence des soufflets (6, 9) actionnés par de l'air comprimé.

3. Dispositif selon la revendication 1 ou 2, caractérisé en ce que le rouleau d'entraînement (3) et le convoyeur (1) sont reliés de manière telle que le convoyeur suive les déplacements du rouleau d'entraînement lorsqu'une pièce de viande est transportée de manière graduelle à travers le dispositif.

4. Dispositif selon l'une quelconque des revendications 1 à 3, caractérisé en ce que le rouleau d'entraînement (3) et le convoyeur (1) sont montés sur un châssis commun (2, 4) qui est suspendu de manière mobile dans un poste (10, 11) et en ce que des moyens de puissance (9, 12) actionnant le châssis sont agencés entre le châssis (2, 4) et le poste (10, 11).

5. Dispositif selon l'une quelconque des revendications 1 à 4, caractérisé en ce que le châssis comporte deux éléments latéraux (2), dans lequel des paliers sont montés pour le rouleau d'entraînement et pour les rouleaux du convoyeur, par lesquels des moyens de puissance (6) agissant de manière verticale peuvent être positionnés au niveau de chaque extrémité d'arbre du rouleau d'entraînement, conçus pour actionner les éléments latéraux respectifs (2) vers le haut par rapport au poste (10, 11) alors que des moyens (9) de puissance agissant de manière horizontale sont situés entre les extrémités éloignées des éléments latéraux et le poste.

6. Dispositif selon l'une quelconque des revendications 1 à 5 caractérisé en ce que le châssis comporte une plaque de montage (4) horizontale, sur laquelle sont montés deux moyens (6) de puissance agissant de manière verticale, dont les parties mobiles sont reliées chacune à son propre élément latéral (2) à proximité de l'extrémité d'arbre du rouleau d'entraînement.

7. Dispositif selon l'une quelconque des revendications 1 à 6, caractérisé en ce que deux moyens (9) de puissance agissant de manière horizontale sont placés entre le poste (10, 11) et la plaque (4), lesquels moyens actionnent la plaque à l'aide d'une force horizontale vers les doigts (17) qui séparent les os de la viande.

8. Dispositif selon l'une quelconque des revendications 1 à 7, caractérisé en ce que le rouleau d'entraînement (3) a un diamètre plus petit que 60 mm.

9. Dispositif selon l'une quelconque des revendications 1 à 8, caractérisé en ce que le rouleau d'entraînement (3) a un diamètre qui diminue vers ses extrémités.

10. Dispositif selon l'une quelconque des revendications 1 à 9, ayant deux rouleaux (28, 29) pour saisir les extrémités de l'os qui passent à travers l'espace existant entre les doigts (17), caractérisé en ce que les extrémités d'arbre des rouleaux peuvent se déplacer indépendamment l'un de l'autre dans la direction verticale et en ce que les extrémités d'arbre peuvent être actionnées vers la position de saisie par des moyens de puissance (27).
